# FASCICULE DE BREVET EUROPEEN

(11) **EP 2 279 120 B1**
(45) Date de publication et mention de la délivrance du brevet: **05.10.2011**
(21) Numéro de dépôt: 09745944.0
(22) Date de dépôt: 15.04.2009
(51) Int. Cl.: B64G 1/22, B64G 1/64, B64G 1/44

(54) **DISPOSITIF DE FIXATION SERVANT A ASSEMBLER DES OBJETS, PUIS A LES LIBERER RAPIDEMENT**
FIXIERVORRICHTUNG ZUR MONTAGE UND SCHNELLLÖSUNG VON OBJEKTEN
FIXING DEVICE FOR THE ASSEMBLY AND QUICK RELEASE OF OBJECTS

(30) Priorité: 16.04.2008 FR 0852584; 14.08.2008 FR 0855573
(43) Date de publication de la demande: 02.02.2011
(73) Titulaire: Conseil Et Technique (Société À Responsabilité Limitée), 31400 Toulouse (FR)
(72) Inventeur: VALEMBOIS, Guy, F-31400 Toulouse (FR)
(74) Mandataire: Rhein, Alain
(86) Numéro de dépôt international: PCT/FR2009/050701
(87) Numéro de publication internationale: WO 2009/138625

(56) Documents cités:
- FR-A- 2 756 619
- JP-U- 1 114 400

## Description

La présente invention a pour objet un dispositif de fixation servant à assembler des objets, puis à les libérer rapidement, et qui comprend à cet effet d'une part un élément d'accrochage pouvant être solidaire de l'un des objets à maintenir réunis, et d'autre part un moyen de retenue pouvant être solidaire de l'autre objet et configuré pour retenir avant libération ledit élément d'accrochage, ledit moyen de retenue étant constitué du rapprochement, autour d'une partie arrimable dudit élément d'accrochage, de plusieurs pièces séparables maintenues rapprochées par l'intermédiaire de moyens de précontrainte désengageables.

On connaît déjà des dispositifs de fixation de ce type, cf. les documents FR 2 756 619 et JP 01 114400 U, qui trouvent une application essentiellement dans le domaine spatial, où ils sont utilisés pour le gerbage des appendices sur satellite, par exemple les générateurs solaires. En position de lancement, les appendices repliés sont fixés par ces dispositifs de fixation. Après lancement ces dispositifs de fixation sont activés, ce qui a pour effet de libérer les moyens d'accrochage, et de permettre le déploiement des appendices du satellite.

Le désengagement des moyens de précontrainte est généralement réalisé de manière pyrotechnique, ce qui présente l'inconvénient de provoquer des chocs dans la structure des satellites ou de leur appendice, ces chocs étant dus soit aux fonctionnement pyrotechnique, soit à la libération brutale de l'énergie potentielle accumulée par la contrainte sur les pièces des moyens de retenue.

Pour pallier ces inconvénients, il a été proposé que les moyens de précontrainte désengageable consistent en un fil enroulé autour des pièces séparables, lequel fil est totalement ou partiellement fusible, en sorte de permettre la séparation desdites pièces séparables.

Ainsi le document FR 2 756 619 montre un dispositif de libération qui comprend d'une part un écrou de retenue solidaire de l'un des objets à maintenir réunis, et constitué de deux parties, l'une montée pivotante sur l'autre qui est fixe, en sorte de pouvoir s'en écarter sous l'action d'un ressort et ainsi s'ouvrir; et d'autre part une tige dont l'extrémité est filetée, solidaire d'un autre des objets à maintenir réunis, lesdites parties, qui présentent intérieurement un taraudage, sont maintenues serrées sur ladite extrémité filetée pour la retenir, sous précontrainte au travers d'un fil enroulé autour d'elles, les extrémités dudit fil étant maintenues par des fils fusibles sous l'effet d'une tension électrique.

Un tel dispositif présente l'inconvénient que seule la pièce pivotante peut s'écarter lors de la libération, et que par conséquent le désengagement de l'extrémité filetée nécessite non seulement le relâchement de la précontrainte, mais également un déplacement dans le sens transversal de ladite extrémité filetée par rapport à la partie fixe de l'écrou de retenue, ce qui, selon le domaine d'application, peut être préjudiciable au déplacement des objets après libération. Par ailleurs, lorsqu'il a une tension entre les deux objets, la libération peut générer un déplacement non souhaité, ou non contrôlé, de l'un par rapport à l'autre.

Le document EP 1 255 675, décrit un actionneur fusible à alimentation redondante, qui comprend un moyen de retenue constitué d'une pluralité de pièces maintenues serrées autour de la tête d'une goupille de fixation, par un fil de retenue enroulé autour desdites pièces, et dont une extrémité est fusible sous l'effet d'une tension électrique. On notera qu'un tel dispositif présente l'inconvénient d'un possible échappement de pièces avec risques d'endommagement des objets à maintenir.

La présente invention a également pour but de remédier aux inconvénients précités en proposant un dispositif mécanique de fixation permettant une libération tout en neutralisant les chocs induits par la libération de l'énergie potentielle de précontrainte, et de conception plus simple que celles des dispositifs décrits dans les documents précités qui en permet une miniaturisation, et tout en autorisant des évolutions qui offrent des fonctionnalités supplémentaires.

Le dispositif de fixation selon l'invention, qui sert à assembler des objets, puis à les libérer rapidement, comprend d'une part un élément d'accrochage pouvant être solidaire de l'un des objets à maintenir réunis, et d'autre part un moyen de retenue pouvant être solidaire de l'autre objet et configuré pour retenir avant libération ledit élément d'accrochage, ledit moyen de retenue étant constitué du rapprochement, autour d'une partie arrimable dudit élément d'accrochage, de plusieurs pièces séparables maintenues rapprochées par l'intermédiaire de moyens de précontrainte désengageables, et il se caractérise essentiellement en ce que d'une part lesdites pièces séparables consistent en des parties dudit moyen de retenue, liées les unes aux autres au travers de moyens déformables élastiquement qui tendent à rappeler toutes lesdites parties en écartement les unes des autres; et d'autre part lesdits moyens de précontrainte consistent en un élément constituant un lien, enroulé autour desdites parties en sorte de les maintenir refermées sur ledit élément d'accrochage, et dont au moins une extrémité est fixée à un mécanisme de maintien de la tension exercée sur ce lien, qui comprend des moyens permettant de libérer cette tension à la demande.

Lors de la libération, toutes les pièces séparables s'écartent de l'élément d'accrochage qui se trouve instantanément libre, sans que soit nécessaire un quelconque autre mouvement.

Selon un mode de réalisation particulier, le moyen de retenue consiste en une pince se présentant sous la forme d'un élément de forme globalement tubulaire et dans lequel sont pratiquées des fentes longitudinales partielles formant des pétales qui présentent des propriétés de ressort permettant de rappeler en écartement les unes des autres les extrémités desdites pétales, lesquelles extrémités qui constituent les parties séparables, lorsqu'elles ne sont pas soumises à l'action des moyens de précontrainte.

Une telle pince peut consister, notamment lorsqu'elle est de taille réduite, en une pièce monobloc, ou bien en l'assemblage de plusieurs éléments.

Selon une caractéristique additionnelle du dispositif de fixation selon l'invention, la portion de l'élément d'accrochage destinée à être serrée entre les parties séparables, et les zones de ces dernières destinées à venir au contact avec ledit élément d'accrochage, présentent des profils complémentaires, aptes à assurer une rétention, lorsque lesdites parties séparables sont soumises à la précontrainte.

Selon l'utilisation finale du dispositif de fixation, les profils complémentaires peuvent présenter des formes différentes.

Il est ainsi possible que l'élément d'accrochage présente en extrémité un élément sphérique, ou partiellement sphérique, tandis que les parties séparables des moyens de retenue délimitent, lorsqu'elles sont maintenues rapprochées, une cavité sphérique apte à retenir ledit élément sphérique, et même à lui permettre d'y évoluer en rotation et par conséquent autoriser un pivotement relatif dudit élément d'accrochage.

Selon une variante, l'extrémité de l'élément d'accrochage est filetée, et les parties séparables des moyens de retenue délimitent, lorsqu'elles sont maintenues rapprochées, une cavité taraudée permettant le vissage de ladite extrémité filetée.

Selon une autre caractéristique du dispositif de fixation selon l'invention, le moyen de retenue peut être lié à l'un des objets à accrocher, au travers de moyens aptes à assurer plusieurs degrés de liberté d'un objet par rapport à un autre, tout en conservant une grande rigidité de translation dans le sens axial.

Selon un mode de réalisation particulier du dispositif de fixation selon l'invention, le moyen de retenue comporte une platine destinée à être fixée à l'un des objets à assembler, et à laquelle sont solidarisés les moyens déformables élastiquement par l'intermédiaire de zones articulées.

Selon un autre mode de réalisation particulier du dispositif de fixation selon l'invention, le moyen de retenue est maintenu en appui contre l'objet auquel il peut être solidarisé, par l'intermédiaire d'une interface autorisant un mouvement d'oscillement dudit objet par rapport à l'élément d'accrochage.

Selon une caractéristique additionnelle de cet autre mode de réalisation particulier du dispositif de fixation selon l'invention, l'ensemble des parties séparables du moyen de retenue maintenues resserrées les unes contre les autres, présente en extrémité une cavité en forme de calotte sphérique, percée centralement de la cavité destinée à loger de l'élément d'accrochage, tandis que l'interface consiste en une rondelle présentant un bord conformé pour coopérer en pivotement avec ladite cavité contre laquelle il vient en appui, tandis que le bord opposé demeure, directement ou indirectement, en appui plan contre l'objet auquel ledit moyen de retenue est solidarisé.

Le lien pourra consister en un jonc d'acier de qualité ressort, un câble métallique ou tout cordage correctement dimensionné. L'une des extrémités de ce lien est fixée à un mécanisme de maintien et de libération de la tension exercée, tandis que l'autre est solidarisée à un élément fixe, éventuellement au moyen de retenue lui-même, ou à un mécanisme identique à celui précité.

Le fonctionnement du dispositif de fixation selon l'invention est le suivant, l'extrémité de l'élément d'accrochage est placée entre les parties séparables du moyen de retenue, le lien est enroulé autour en une ou plusieurs couches autour pour resserrer lesdites parties, puis il est fixé au mécanisme de maintien et de libération.

On notera que le nombre de spires, conjugué à l'angle d'inclinaison du filet, dans le cas d'une fixation par filetage, peut garantir un rapport très grand entre la tension d'assemblage et la tension de maintien.

Lorsque le mécanisme de maintien et de libération libère le lien, ou la tension exercée sur celui-ci, la pince s'ouvre et libère l'élément d'accrochage.

On notera qu'avantageusement, la faible tension de maintien nécessaire permet un dimensionnement et une miniaturisation aisée du mécanisme de maintien et de libération.

Dans le cas de l'utilisation du dispositif de fixation selon l'invention dans l'industrie spatiale on peut prévoir un mécanisme apte à pouvoir relâcher ou sectionner le lien à ses deux extrémités, ou deux fois à une seule de ses extrémités, en doublant le mécanisme dédié à cette fonction. Cette possibilité permet ainsi de créer la redondance de fonctionnement

Dans le cas d'un nombre de couches d'enroulement du lien sur la poulie supérieure à un et d'un lien réalisé avec un matériau ayant des caractéristiques plastiques, le déroulement du lien se fera par couche. Ainsi à partir d'une certain pourcentage de déroulement la résistance du lien, maintenu par l'adhérence et les effets d'Euler, ne sera plus suffisante et aura pour conséquence un allongement du lien par déformation plastique. Cet effet permettra une légère ouverture initiale de la pince qui relâchera la précontrainte de l'élément d'accrochage, supprimant ainsi l'énergie potentielle accumulée dans l'élément fileté et donc le choc induit par sa libération brusque.

Le mécanisme de maintien et de libération peut fonctionner de différentes manières et consister par exemple, non limitativement, en une gâchette à électro-aimant, une résistance chauffante réalisant la fusion d'un lien en polymère, un micro mécanisme pyrotechnique.

Dans un mode de réalisation particulier, le mécanisme de libération est constitué d'un couteau rotatif, dont le pivotement est motorisé par un ressort initialement précontraint. Un doigt, axe d'un électroaimant, maintient le couteau dans sa position d'attente. Un second axe accroché à une flamme permet de garantir les fonctions de sécurité au montage, verrouillage du mécanisme pendant des phases de connections électriques, verrouillage du mécanisme sans la fonction électroaimant, essais manuels du dispositif.

Le ressort est géométriquement disposé de manière à réduire significativement son effort de maintien tout en garantissant une efficacité à la coupe. On jouera sur le bras de levier de l'effort du ressort à cet effet.

Selon une caractéristique additionnelle du dispositif selon l'invention, le contact entre le moyen de retenue et l'objet auquel il peut être solidarisé, est réalisé au travers d'une interface conformée en un système à cliquet, et ledit moyen de retenue comporte des moyens permettant son entraînement en rotation axiale, en sorte qu'une rotation dans le sens inverse de celui d'enroulement du lien alors que l'extrémité libre de celui-ci est bloquée, permette le resserrement des parties séparables du moyen de retenue.

Selon un mode de réalisation avantageux du dispositif de fixation selon l'invention l'invention, le lien se présente sous la forme d'un ruban en métal ou matériau composite ou synthétique, enroulé sur lui-même pour être conformé en une spirale et présentant des caractéristiques de ressort, dont l'extrémité, du côté de la spire intérieure est solidarisée à l'une des parties séparables du moyen de retenue, tandis que l'autre extrémité, du côté de la spire extérieure est, après enroulement dudit ruban sur ledit moyen de retenue autour desdites parties séparables, solidarisée au mécanisme de maintien.

Selon une caractéristique additionnelle du dispositif selon l'invention, le mécanisme de maintien consiste en une gâchette à électroaimant apte à coopérer avec l'extrémité libre du ruban qui est conformée pour pouvoir être accrochée à ladite gâchette.

Les avantages et les caractéristiques du dispositif de fixation selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en perspective d'un dispositif de fixation selon l'invention.
- la figure 2 représente une vue schématique en perspective d'une partie du même dispositif de fixation, dans une phase d'utilisation différente.
- la figure 3 représente une vue schématique en perspective d'une variante du même dispositif de fixation.
- la figure 4 représente une vue schématique en perspective et en coupe longitudinale médiane de la même variante.
- la figure 5 représente une vue schématique et perspective d'une partie d'une autre variante.
- la figure 6 représente une vue schématique et en perspective d'une partie d'une autre variante du même dispositif de fixation.
- la figure 7a représente une vue schématique partielle en perspective d'un montage illustrant le principe d'utilisation du mode de réalisation représenté sur la figure 6.
- la figure 7b représente une vue schématique partielle en perspective d'une partie du même montage.
- la figure 7c représente une vue schématique partielle en perspective et en coupe transversale du même montage.
- les figures 8a et 8b représentent des vues schématiques en perspective, selon des angles différents, d'un dispositif de fixation selon l'invention, utilisant la partie représentée sur la figure 6.
- la figure 9 représente une vue schématique partielle en plan du même dispositif de fixation.
- la figure 10 représente une vue schématique en perspective d'un autre mode de réalisation du dispositif de fixation selon l'invention.
- les figures 11a et 11b représentent des vues schématiques en perspective, de parties de cet autre mode de réalisation du dispositif.
- la figure 12 représente une vue schématique en perspective d'une variante du mode de réalisation représenté sur la figure 10.
- la figure 13 représente une vue schématique en coupe transversale de la figure 12.
- les figures 14a, 14b et 14c représentent des vues schématiques en perspective, d'une autre variante du mode de réalisation représenté sur la figure 10, dans des phases différentes d'utilisation.

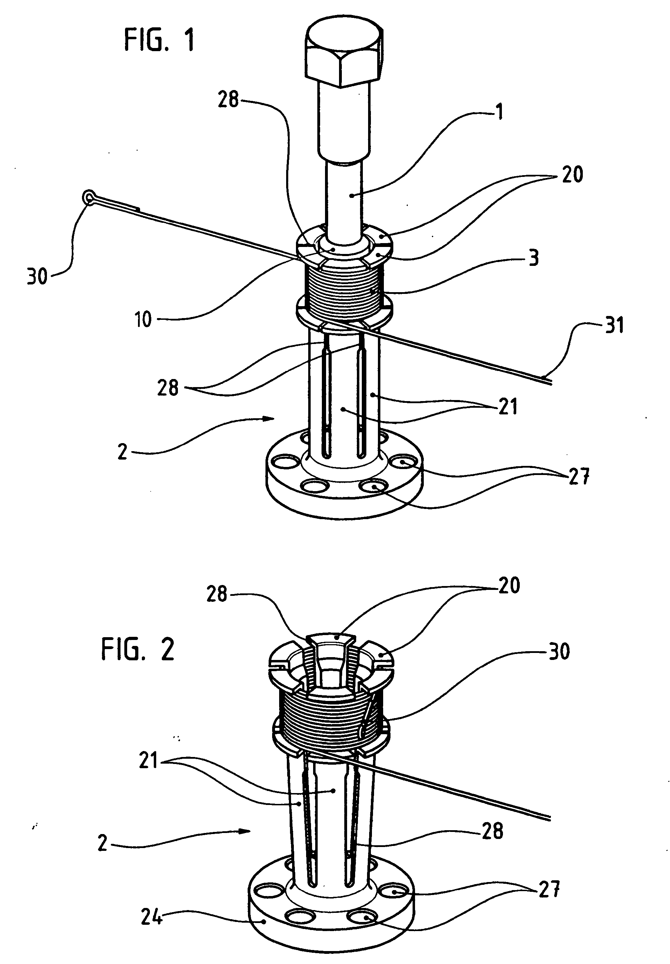

En référence aux figures 1 et 2 on peut voir un premier mode de réalisation du dispositif de fixation selon l'invention, qui comprend un élément d'accrochage 1 destiné à être solidarisé à un premier objet, non représenté, et un moyen de retenue 2 destiné à être solidarisé à un second objet, également non représenté.

Ce dispositif de fixation selon l'invention est utilisé pour lier fixement les premier et second objets, puis permettre de les désolidariser lorsque cela est voulu.

Le moyen de retenue 2 présente la forme générale d'un tube, comprenant à une extrémité une platine 24 percée de trous 27 permettant la fixation au second objet, tandis que son autre extrémité comporte des fentes longitudinales 28 qui créent des parties périphériques 20 liées chacune à la platine 24 au travers d'un segment déformable élastiquement 21, permettant aux parties périphériques 20 de pouvoir s'écarter et se rapprocher les unes des autres.

On notera que, de préférence, le moyen de retenue est conformé en sorte que les segments 21 présentent des qualités ressort, favorisant le rappel des parties 20 dans le sens de l'écartement.

Sur la figure 1, on peut voir que les parties périphériques 20 sont maintenues rapprochées et serrées sur l'extrémité libre 10 de l'élément d'accrochage 1, au moyen des l'enroulement autour d'elles d'un lien 3, les extrémités 30 et 31 de ce lien 3 étant maintenues en tension, l'une au moins étant reliée à un mécanisme, non représenté, de maintien et de libération de cette tension, tandis que l'autre peut être reliée à un mécanisme identique, ou bien être solidarisée, directement ou indirectement, au second objet.

On notera que l'extrémité libre 10 de l'élément d'accrochage 1, serrée par les parties 20, ainsi que le profil intérieur de celles-ci, sont configurés pour permettre la rétention. Ainsi, l'extrémité 10 peut par exemple consister en un filetage, tandis que les parties 20 présentent des filets concordant avec ce filetage, en sorte de former lors du rapprochement de ces parties 20, un taraudage.

On notera également qu'avantageusement les parties 20 assemblées sont conformées extérieurement en une sorte de bobine facilitant l'enroulement du lien 3.

Sur la figure 2, on peut voir que le relâchement de la tension exercée sur le lien, provoque le relâchement de la contrainte qu'il exerce sur les parties 20 qui, du fait des propriétés de rappel élastique des segments 21, s'écartent pour permettre la libération de l'élément d'accrochage 1, non représenté.

On comprendra que le dispositif de fixation selon l'invention est ainsi de conception simple, et peut parfaitement être réalisé dans des dimensions très réduites. Par ailleurs, il n'y a aucun risque, après libération, d'échappement de certains des éléments qui le composent.

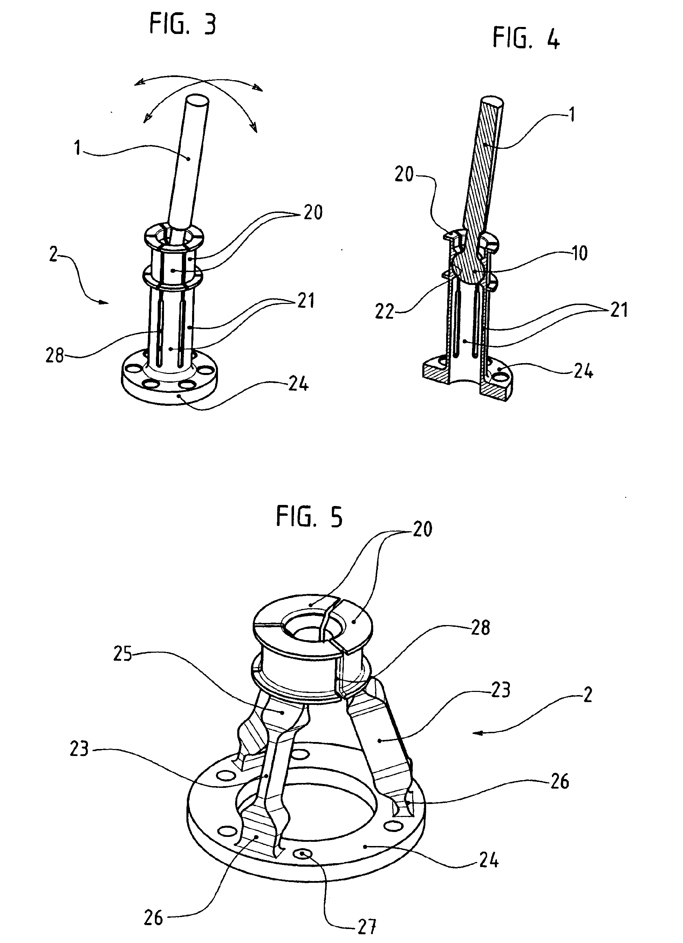

En référence aux figures 3 et 4, on peut voir que, selon un mode de réalisation particulier, l'extrémité 10 de l'élément d'accrochage 1 se présente sous la forme d'une sphère, tandis que les parties 20 sont conformées pour reconstituer après rapprochement, une cavité sphérique 22 apte à accueillir l'extrémité 10 et à permettre une certaine mobilité en pivotement, de l'élément d'accrochage 1 par rapport au moyen de retenue 2.

En référence maintenant à la figure 5, on peut voir que selon un autre mode de réalisation, les parties 20 sont reliées à la platine 24 chacune au travers d'un bras 23 qui présente des caractéristiques de flexibilité. Les bras 23 sont de forme globalement allongée, et sont convergents vers un point l'axe principal du moyen de retenue 2.

Chacun des ces bras 23 est conçu en sorte de présenter une certaine souplesse en flexion tout en conservant une grande rigidité en traction.

Ainsi chacun des bras 23 est lié à une partie 20 au travers d'une liaison 25 et à la platine 24 au travers d'une liaison 26, les liaisons 25 et 26 étant de type rotule, ou bien pivotant selon des pivots d'axes tangents.

Dans ce cas l'élément d'accrochage 1 est également mobile dans plusieurs directions, du fait de la possibilité de déformation du moyen de retenue 2.

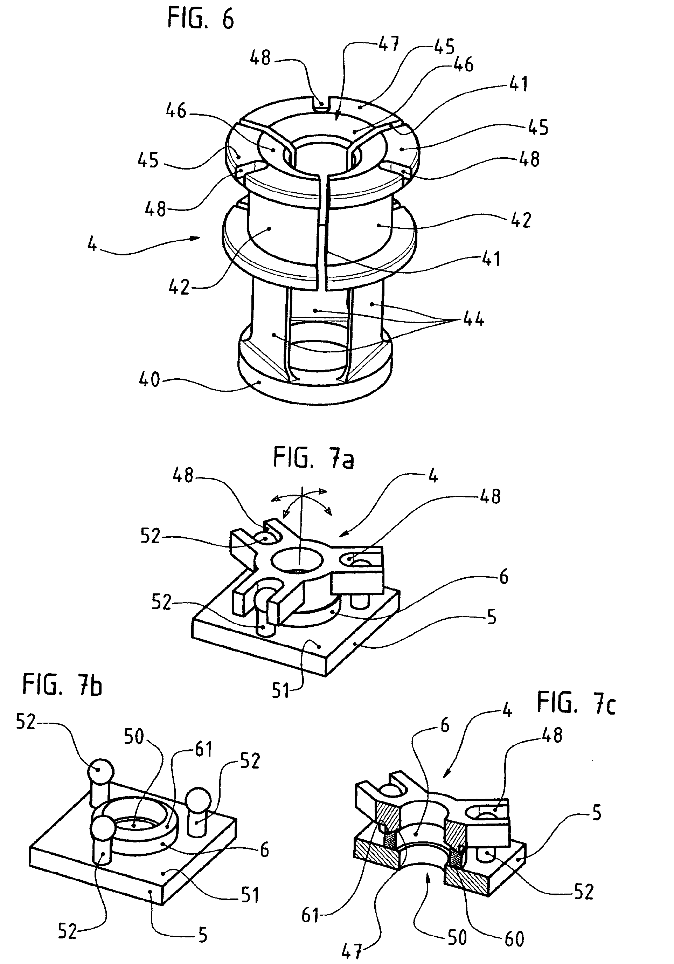

En référence maintenant aux figures 6, 7a, 7b, 7c, 8 et 9, on peut voir un mode de réalisation préférentiel du dispositif de fixation selon l'invention.

La figure 6 représente le moyen de retenue 4 de ce mode de réalisation préférentiel, lequel présente sensiblement les caractéristiques du moyen de retenue 2 du dispositif de fixation des figures 1 et 2.

Ainsi, le moyen de retenue 4 présente une forme tubulaire, il comporte à une extrémité une platine 40, des fentes longitudinales partielles 41 qui créent à l'autre extrémité trois parties périphériques 42 qui délimitent une cavité interne rétentrice 43 destinée à recevoir l'extrémité libre d'un élément de fixation non représenté, et qui sont liées à la platine 40 chacune par l'intermédiaire d'un segment élastique 44 qui présente des propriétés ressort de rappel en écartement des parties périphériques 42. Par ailleurs les parties périphériques 42 sont également sont configurées extérieurement, lorsqu'elles sont rapprochées les unes des autres, en forme de bobine de manière à favoriser le maintien d'un enroulement d'un lien, non représenté.

On notera que la platine 40 n'est pas pourvue de trous pour sa fixation à un objet, en effet, comme cela sera décrit plus loin, la platine 40 n'a pour but que de relier les segments élastiques 44.

Chacune des trois parties périphériques 42 comporte à son extrémité, c'est-à-dire du côté du moyen de retenue 4 opposé à celui comprenant la platine 40, une face 45 s'étendant dans un plan perpendiculaire ou sensiblement perpendiculaire à l'axe principal du moyen de retenue 4, dans laquelle est pratiquée, du côté en regard de cet axe principal, un évidement 46, configuré en sorte que lorsque les parties périphériques 42 sont maintenues rapprochées, serrées sur l'élément d'accrochage, non représenté, l'ensemble des évidements 46 forme une cavité 47 centrale en forme de calotte sphérique.

D'autre part, chacune des parties périphériques 42 comporte dans sa face 45, extérieurement à l'évidement 46, une échancrure 48, les trois échancrures 48 étant espacées angulairement de 120°.

En référence maintenant aux figures 7a, 7b et 7c, on peut voir des schémas illustrant le principe de fonctionnement d'une partie du moyen de retenue 4, et notamment en ce qui concerne la cavité 47 et les échancrures 48.

Sur ces figures, est représentée une embase 5, percée d'un trou central 50, et de la face supérieure 51 de laquelle font saillie trois plots 52 disposés coaxialement au trou 50 et espacés angulaire de 120°. Sur les figures 7a et 7c est également représenté un élément figurant l'extrémité du moyen de retenue 4, et plus particulièrement la cavité 47 et les échancrures 48.

Ainsi, le moyen de retenue 4 est associé à l'embase 5, chacun des plots 52 étant engagé dans une échancrure 48, tandis qu'une rondelle 6 est intercalée entre l'embase 5 et le moyen de retenue 4, concentriquement au trou 50, la rondelle 6 comprenant un bord inférieur 60 plan destiné à venir au contact de la face supérieure 51, et un bord supérieur 61 conformé en portion de sphère en sorte de pouvoir réaliser une association congruente avec la cavité 47.

On comprendra que du fait de la coopération des plots 52 avec les échancrures 48, le moyen de retenue 4 est immobilisé en rotation axiale par rapport à l'embase 5, et que du fait de liaison sphérique entre la cavité 48 et le bord 61, il peut pivoter par rapport à l'embase 5. Une telle architecture permet donc de réaliser une liaison à deux degrés de liberté susceptible de résister à un effort axial important.

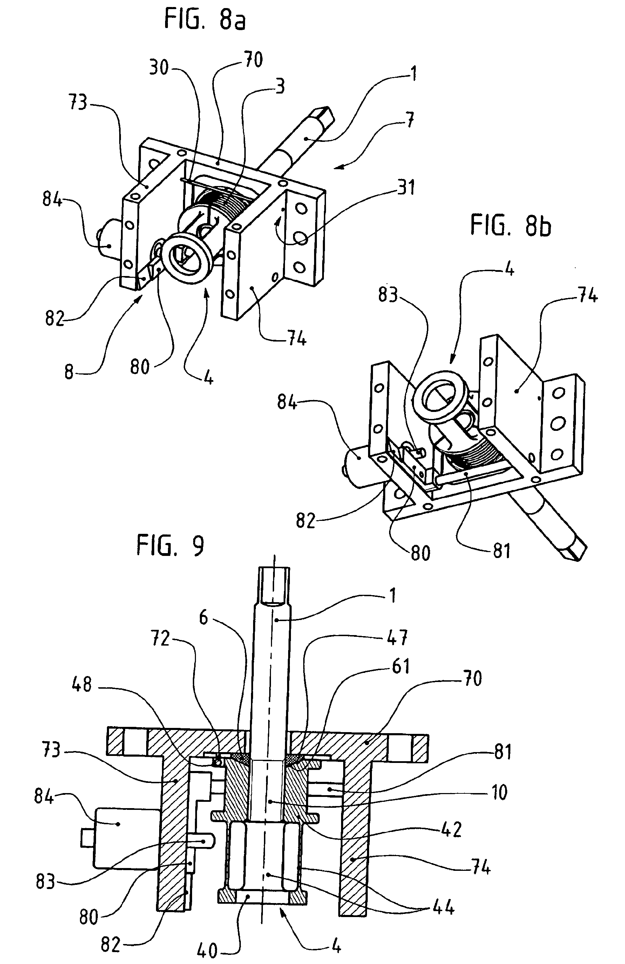

En référence maintenant aux figures 8a, 8b et 9, on peut voir un dispositif de fixation selon l'invention complet.

Il comprend un bâti 7 destiné à être solidarisé à l'un des objets à assembler, un élément d'accrochage 1 destiné à être solidarisé à un autre de ces objets, un moyen de retenue 4, un lien 3, et un mécanisme 8 de maintien et de libération de ce lien 3.

Le bâti 7 comprend une paroi 70 percée d'un trou 71, visible sur la figure 9, dans lequel passe avec jeu l'élément d'accrochage 1 en sorte de laisser dépasser de l'autre côté de la paroi 70 l'extrémité 10, laquelle est engagée dans la cavité interne rétentrice 43 du moyen de retenue 4. On notera que de préférence dans ce mode de réalisation, l'extrémité 10 de l'élément d'accrochage est filetée, tandis que la cavité interne rétentrice 43 forme, après resserrement des parties périphériques 42 un trou taraudé.

Comme cela est visible sur la figure 9, le moyen de retenue 4 vient en appui contre la paroi 70 par l'intermédiaire d'une rondelle 6 dont le bord supérieur 61 conformé en portion de sphère vient s'inscrire dans la cavité 47, tandis que les échancrures 48 s'adaptent chacune sur un plot 72, les plots 72 pouvant consister en des goupilles implantées dans la paroi 70.

Le bâti 7 comprend également deux parois parallèles 73 et 74 qui s'étendent perpendiculairement de la paroi 70, de part et d'autre du trou 71 et donc du moyen de retenue 4.

Le lien 3, visible sur la figure 8a, est enroulé autour des parties périphériques 42 du moyen de retenue 4, en sorte d'immobiliser l'élément d'accrochage 1, l'extrémité 31 du lien 3 étant solidarisée à la paroi 74, tandis que son extrémité 30 traverse la paroi 73 et que lui est appliquée une certaine tension.

L'élément de fixation 1 et le moyen de retenue 4 sont ainsi solidarisés fixement, tout en autorisant un oscillement du fait de la coopération de la rondelle 6 avec la cavité 47.

Le mécanisme 8, comprend un couteau 80 monté mobile en pivotement sur la paroi 73, rappelé par un ressort de torsion 81, et dont la lame 82 présente une trajectoire coupant perpendiculairement l'axe de passage du lien 3, le couteau étant maintenu en position d'attente par le doigt 83 d'un électro-aimant 84.

Lors du retrait du doigt 83, le couteau 80 est libéré et vient couper le lien 3 provoquant le relâchement de la pression exercée sur les parties périphériques 42 du moyen de retenue 4, lesquelles, sous l'action des segments 44, s'écartent pour libérer l'élément d'accrochage 1.

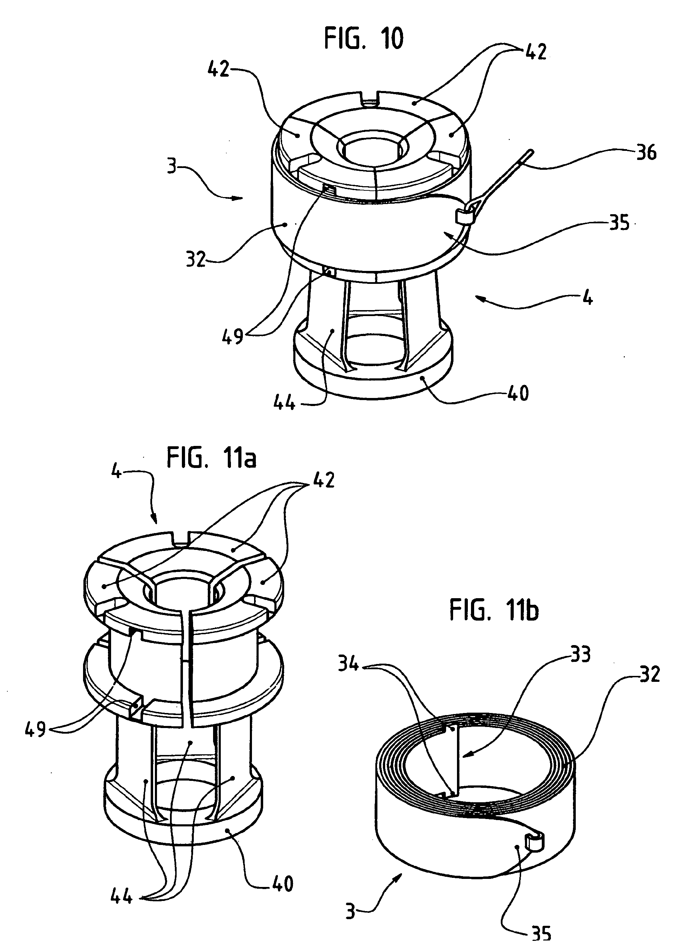

En référence maintenant aux figures 10, 11a et 11b, on peut voir un autre mode de réalisation du dispositif de fixation selon l'invention, dont la caractéristique avantageuse se situe au niveau des moyens de précontrainte. Sur ces figures, le moyen de retenue 4 présente, non exclusivement les caractéristiques de celui représenté sur les figures 6, 8a, 8b et 9, il pourrait notamment s'agir d'un autre mode de réalisation de ce moyen de retenue.

Ainsi, sur ces figures on peut voir le lien 3 se présente sous la forme d'un ruban 32, ou bande, en métal, tel que l'acier ou un alliage bronze-béryllium, ou en matériau composite, qui peut être textile, et enroulé sur lui-même en une spirale pour former un ressort. Ce ruban 32 comporte à son extrémité 33, du côté intérieur de l'enroulement, des moyens d'accrochage 34, tandis que l'une des parties séparables 42 du moyen de retenue 4 comporte des empreintes 49 destinées à accueillir ces moyens d'accrochage 34, afin de permettre la solidarisation de cette extrémité 33, l'extrémité extérieure 35 du ruban 32 étant conformée pour permettre l'accrochage à un moyen de tension, au travers d'un lien sécable 36 susceptible d'être sectionné par mécanisme de libération, non représenté.

De manière préférentielle, le ruban 32 enroulé en spirale, présente, au repos, un diamètre intérieur légèrement supérieur à celui externe de la poule que forment les parties séparables 42.

En fonctionnement, une traction sur l'extrémité 35 du ruban 32 provoque le resserrement des parties séparables 42 et donc le maintien de l'élément d'accrochage, non représenté. Lors du relâchement de l'extrémité 35, le ruban 32 reprend sa forme qui initial, ce qui permet l'écartement des parties séparables 42.

Ce mode de réalisation présente de nombreux avantages. Ainsi, le frottement sur les couches successives du ruban 32, lorsqu'il est en position fermée, participe à la tenue mécanique du ressort qu'il forme, et ainsi diminue d'autant l'effort nécessaire pour le maintenir avec le lien sécable 36. La libération de l'élément d'accrochage se fait de manière à ne pas nécessiter d'énergie extérieure, car le ruban 32 revient naturellement en position ouverte. Enfin lors de la libération du ruban 32, il n'y a aucun risque de création de noeud, ou de blocage du fonctionnement du moyen de retenue 4, alors que cela peut arriver avec un lien d'une autre nature.

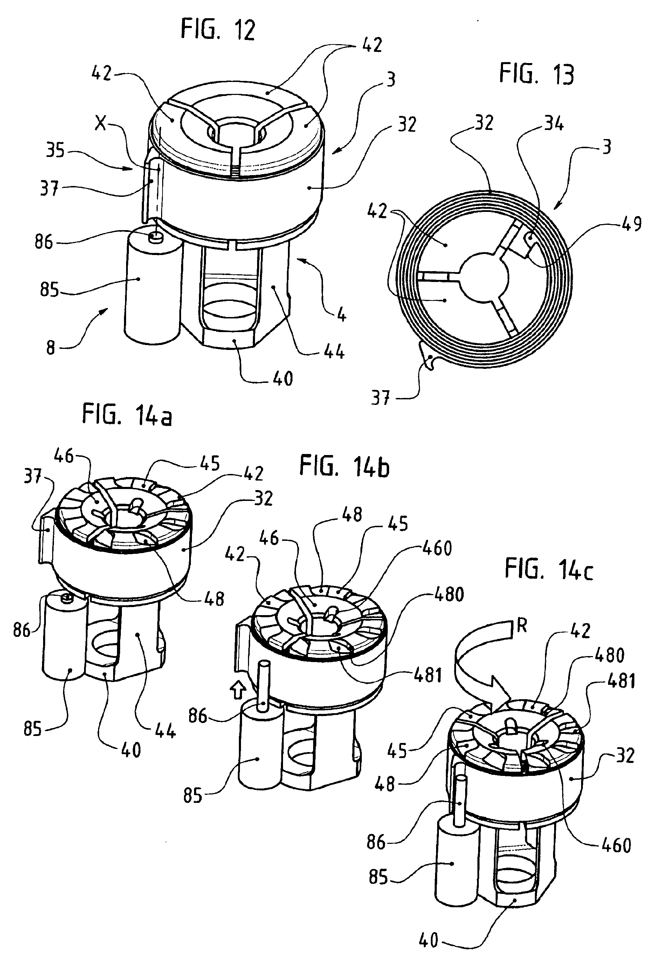

En référence à la figure 12 on peut voir une variante du même dispositif, où le mécanisme 8 de maintien et de libération comprend un électroaimant 85 commandant une gâchette 86 mobile en déplacement selon un axe X parallèle à celui principal du moyen de retenue 4, et apte à venir immobiliser le ruban 32 en déroulement, lequel comporte à cet effet à son extrémité libre 35 un crochet 37, tandis que son autre extrémité comporte, comme cela est visible sur la figure 13, un moyen d'accrochage 34 prenant place dans une empreinte 49 réalisée dans l'une des parties séparables 42 du moyen de retenue 4.

La libération est obtenue par la rétraction de la gâchette 86. Comme cela a déjà été évoqué précédemment, le ruban 32, pour peu qu'il soit enroulé en un nombre suffisant de couches, est pratiquement autobloquant, c'est-à-dire que l'effort de maintien nécessaire reste négligeable.

En référence maintenant aux figures 14a, 14b et 14c, on peut voir le même mode de réalisation équipé de plus de moyens permettant le réarmement après libération.

Ainsi ce dispositif comporte un moyen de retenue 4 comprenant des parties séparables 42 contenues par un lien 3 se présentant sous la forme d'un ruban 32, et associé à un mécanisme 8 de maintien et de libération comprenant un électroaimant 85 commandant une gâchette 86 mobile.

De plus comme pour le mode de réalisation représenté sur, notamment la figure 6, les faces 45 des parties périphériques 42 comportent des échancrures 48 destinées à coopérer avec des plots non représentés.

Dans ce mode de réalisation, les échancrures 48 sont plus nombreuses, en l'occurrence trois par face 45, et sont d'une forme particulière à savoir qu'elles sont en forme de dents, présentant chacune essentiellement deux pans, l'un 480 disposé dans un plan sensiblement radial, l'autre 481 selon un plan incliné joignant la base d'un pan 480 au plan de la face 45, en sorte de conférer aux faces 45 la forme d'un cliquet. Les faces 45 comportent de plus dans chacun des évidements 46 une encoche 460, l'ensemble formant une empreinte d'entraînement.

Sur la figure 14a on peut voir un moyen de retenue 4 après libération, la gâchette 86 étant en position rentrée dans l'électroaimant 85. Sur la figure 14b, la gâchette 86 est amenée en position sortie tandis que sur la figure 14c le moyen de retenue 4 est entraîné en rotation dans le sens R, contraire à celui d'enroulement du ruban 32, et au travers de l'empreinte formée par les encoches 460, en sorte que le crochet 37 vienne en butée sur la gâchette 86.

Le prolongement du mouvement de rotation R entraîne le resserrement du ruban 32 autour des parties séparables 42 qui se rapprochent les unes des autres, le non retour étant assuré par la coopération des échancrures 48 avec des plots, non représentés, par effet cliquet.

On notera que l'effet cliquet nécessite une mobilité axiale limitée du moyen de retenue 4 par rapport aux plots, non représentés, ce qui est assuré au moyen d'un ressort axial, non représenté, apte à maintenir le moyen de retenue 4 appliqué contre la rondelle sphérique 6, également non représentée.

Après réarmement, l'élément d'accrochage 1, dans la mesure ou l'accrochage est réalisé par vissage, peut être vissé dans le moyen de retenue 4, et le dispositif de fixation est opérationnel.

De manière avantageuse, le réarmement se fait sans démontage, simplement à l'aide d'une clef adaptée par exemple, et le nombre de réarmements n'est pas limité.

On notera que dans le mode de réalisation représenté c'est le moyen de retenue 4 qui comporte les encoches formant cliquet, mais qu'il est également possible, dans une version moins fonctionnelle toutefois, que les encoches soient créées dans l'objet à solidariser, au niveau du bâti 7 par exemple, tandis que ce sont les parties 42 qui comportent les plots.

Quel que soit le mode de réalisation du dispositif de fixation selon l'invention, celui-ci présente de nombreux avantages par rapport à ceux qui existent à ce jour.

Essentiellement, sa conception permet sa miniaturisation, et autorise une certaine souplesse au niveau de la liaison.

Il permet un assemblage de liaisons élémentaires parfaites réalisant une liaison structurelle parfaite à deux degrés de liberté.

L'orientation du moyen de retenue 4, et donc de l'élément d'accrochage 1, se fait sans effort parasite supplémentaire et cette orientation n'est pas limitée en amplitude.

Le lien permettant le maintien par enroulement peut se présenter sous plusieurs formes, la forme de ruban étant cependant la plus performante. En effet, le moyen de retenue 2 ou 4 tel que proposé, permet au travers des segments déformables élastiquement 21 ou 44, un écartement simultané des parties séparables 20 ou 42, et donc une libération également instantanée de l'élément d'accrochage (1). Par ailleurs, le ruban 32 permet, d'une part d'offrir un maintien solide à moindre effort, et d'autre part du fait de ses propriétés ressort, de pouvoir s'ouvrir et s'écarter instantanément après relâchement de son extrémité, de manière à ne pas entraver l'écartement des parties séparables 20 ou 42. De plus, le ruban 32 conserve avantageusement sa forme enroulée en spirale après libération, en sorte que l'ensemble du dispositif reste compact, et qu'il n'y a pas d'expulsion de pièces ou morceaux.

## Revendications

1. Dispositif de fixation servant à assembler des objets, puis à les libérer rapidement, comprenant d'une part un élément d'accrochage (1) pouvant être solidaire de l'un des objets à maintenir réunis, et d'autre part un moyen de retenue (2; 4) pouvant être solidaire de l'autre objet et configuré pour retenir avant libération ledit élément d'accrochage (1), ledit moyen de retenue (2; 4) étant constitué du rapprochement, autour d'une partie arrimable (10) dudit élément d'accrochage, de plusieurs pièces séparables (20; 42) maintenues rapprochées par l'intermédiaire de moyens de précontrainte (3) désengageables, lesdites pièces séparables consistant en des parties (20; 42) dudit moyen de retenue (2; 4), liées les unes aux autres au travers de moyens déformables élastiquement (21; 23; 44) qui tendent à rappeler lesdites parties (20; 42) en écartement les unes des autres, et qui lors de la libération, s'écartent toutes dudit élément d'accrochage (1); **caractérisé en ce que** lesdits moyens de précontrainte (3) consistent en un élément constituant un lien, enroulé autour desdites parties (20; 42) en sorte de les maintenir refermées sur ledit élément d'accrochage (1), et dont au moins une extrémité (31; 35) est fixée à un mécanisme (8) de maintien de la tension exercée sur ce lien (3), qui comprend des moyens (80; 85, 86) permettant de libérer cette tension à la demande.

2. Dispositif de fixation selon la revendication 1, **caractérisé en ce que** le moyen de retenue (2; 4) consiste en une pince se présentant sous la forme d'un élément de forme globalement tubulaire et dans lequel sont pratiquées des fentes longitudinales partielles (28; 41) formant des pétales qui présentent des propriétés de ressort permettant de rappeler en écartement les unes des autres les extrémités desdites pétales, lesquelles extrémités qui constituent les parties séparables (20; 42), lorsqu'elles ne sont pas soumises à l'action des moyens de précontrainte (3).

3. Dispositif de fixation selon la revendication 1 ou la revendication 2, **caractérisé en ce que** la portion (10) de l'élément d'accrochage (1) destinée à être serrée entre les parties séparables (20; 42), et les zones de ces dernières destinées à venir au contact avec ledit élément d'accrochage (1), présentent des profils complémentaires, aptes à assurer une rétention, lorsque lesdites parties séparables (20; 42) sont soumises à la précontrainte.

4. Dispositif de fixation selon l'une quelconque des revendications 1 à 3, **caractérisé en ce que** le moyen de retenue (2; 4) peut être lié à l'un des objets à accrocher, au travers de moyens (10, 22; 48, 6) aptes à assurer plusieurs degrés de liberté d'un objet par rapport à un autre, tout en conservant une grande rigidité de translation dans le sens axial.

5. Dispositif de fixation selon la revendication 4, **caractérisé en ce que** le moyen de retenue (2) comporte une platine (24) destinée à être fixée à l'un des objets à assembler, et à laquelle sont solidarisés les moyens déformables élastiquement (23) par l'intermédiaire de zones articulées (25, 26).

6. Dispositif de fixation selon la revendication 4, **caractérisé en ce que** le moyen de retenue (4) est maintenu en appui contre l'objet auquel il peut être solidarisé, par l'intermédiaire d'une interface (6) autorisant un mouvement d'oscillement dudit objet par rapport à l'élément d'accrochage.

7. Dispositif de fixation selon la revendication 4, **caractérisé en ce que** l'ensemble des parties séparable (42) du moyen de retenue (4) maintenues resserrées les unes contre les autres, présente en extrémité une cavité (48) en forme de calotte sphérique, percée centralement de la cavité (43) destinée à loger l'élément d'accrochage, tandis que l'interface (6) consiste en une rondelle présentant un bord (61) conformé pour coopérer en pivotement avec ladite cavité (48) contre laquelle il vient en appui, tandis que le bord opposé (60) demeure, directement ou indirectement, en appui plan contre l'objet auquel ledit moyen de retenue (4) est solidarisé.

8. Dispositif de fixation selon la revendication 6 ou la revendication 7, **caractérisé en ce que** le contact entre le moyen de retenue (4) et l'objet auquel il peut être solidarisé, est réalisé au travers d'une interface (45, 48, 480, 481) conformée en un système à cliquet, et ledit moyen de retenue (4) comporte des moyens permettant (460) son entraînement en rotation axiale, en sorte qu'une rotation (R) dans le sens inverse de celui d'enroulement du lien (32) alors que l'extrémité libre de celui-ci est bloquée, permette le resserrement des parties séparables (42) du moyen de retenue (4).

9. Dispositif de fixation selon l'une quelconque des revendications 1 à 8, **caractérisé en ce que** le lien (3) se présente sous la forme d'un ruban (32) en métal ou en matériau composite ou synthétique, enroulé sur lui-même pour être conformé en une spirale et présentant des caractéristiques de ressort, dont l'extrémité (33), du côté de la spire intérieure, est solidarisée à l'une des parties séparables (42) du moyen de retenue (4), tandis que l'autre extrémité (35), du côté de la spire extérieure est, après enroulement dudit ruban (32) sur ledit moyen de retenue (4) autour desdites parties séparables (42), solidarisée au mécanisme de maintien.

10. Dispositif de fixation selon la revendication 9, **caractérisé en ce que** le mécanisme de maintien (8) consiste en une gâchette (86) à électroaimant (85) apte à coopérer avec l'extrémité libre du ruban (32) qui est conformée pour pouvoir être accrochée à ladite gâchette (86).

## Claims

1. Fastening device aimed at assembling objects, then at releasing them quickly, including, on the one hand, a coupling element (1), which can be made integral with one of the objects to be maintained united and, on the other hand, retaining means (2 ; 4), which can be made integral with the other object and which is configured to retain, before release, said coupling element (1), said retaining means (2 ; 4) being formed by bringing together, about a fastened portion (10) of said coupling element, several separable parts (20 ; 42) maintained close to each other through pre-stressing means (3), said separable parts consisting of portions (20 ; 42) of said retaining means (2 ; 4), connected to each other through elastically deformable means (21 ; 23 ; 44), which tend to restore said portions (20 ; 42) into their position away from each other, and which during the release all separate from said coupling means (1), wherein said pre-stressing means (3) consist of an element forming a link wound about said portions (20 ; 42) so as to maintain them closed around said coupling element (1), and at least one end (31 ; 35) of which is fixed to a mechanism (8) for maintaining the tension exerted onto this link (3), which comprises means (80 ; 85, 86) permitting to release this tension on request.

2. Fastening device according to claim 1, wherein the retaining means (2 ; 4) consist of a clamp, which is in the form of an element having a globally tubular shape and in which are provided for partial longitudinal slots (28 ; 41), forming petals having springy properties, which permit to restore the ends of said petals into their position away from each other, which ends form said separable portions (20 ; 42), when they are not subjected to the action of the pre-stressing means (3).

3. Fastening device according to claim 1 or claim 2, wherein the portion (10) of the coupling element (1) aimed at being clamped between the separable portions (20; 42) and the areas of the latter aimed at entering into contact with said coupling element (1) have complementary profiles capable of ensuring a retaining when said separable portions (20 ; 42) are subjected to pre-stressing.

4. Fastening device according to any of claims 1 to 3, wherein the retaining means (2 ; 4) can be connected to one of the objects to be coupled, through means (10, 22 ; 48, 6) capable of ensuring several degrees of freedom of an object with respect to another one, while maintaining an important rigidity in translation in axial direction.

5. Fastening device according to claim 4, wherein the retaining means (2) includes a platelet (24) aimed at being fixed to one of the objects to be assembled, and which the elastically deformable means (23) are made integral with through hinged areas (25, 26).

6. Fastening device according to claim 4, wherein the retaining means (4) is maintained resting against the object, which it can be made integral with, through an interface (6) permitting an oscillating motion of said object with respect to the coupling element.

7. Fastening device according to claim 4, wherein the aggregate of the separable portions (42) of the retaining means (4), which are maintained close to each other, has at its end a cavity (48) in the form of a spherical cap, which is centrally drilled by the cavity (43) aimed at accommodating the coupling element, while the interface (6) consists of a washer having an edge (61) shaped so as to cooperate in pivoting with said cavity (48), against which it rests, while the opposite edge (60) rests, directly or indirectly, flat against the object, which said retaining means (4) is made integral with.

8. Fastening device according to claim 6 or claim 7, wherein the contact between the retaining means (4) and the object, which it can be made integral with, occurs through an interface (45, 48, 480, 481) shaped into a ratchet system, and said retaining means (4) includes means (460) permitting its driving in axial rotation, so that a rotation (R) in the direction opposite the direction of winding up of the link (32), while the free end of the latter is blocked, permits bringing together the separable portions (42) of the retaining means (4).

9. Fastening device according to any of claims 1 to 8, wherein the link (3) is in the form of a ribbon (32) made of metal or of a composite material or of plastic, wound onto itself, in order to be shaped into a spiral, and having springy properties, the end (33) of which on the side of the inner winding is made integral with one of the separable portions (42) of the retaining means (4), while the other end (35) on the side of the outer winding is, after winding up of said ribbon (32) on said retaining (4) about said separable portions (42), made integral with the holding mechanism.

10. Fastening device according to claim 9, wherein the holding mechanism (8) consists of a trigger (86) with an electro-magnet (85) capable of cooperating with the free end of the ribbon (32), which is shaped to be capable of being coupled to said trigger (86).

## Patentansprüche

1. Befestigungsvorrichtung, die dazu dient, um Gegenstände zusammenzufügen, sie anschließend schnell freizugeben, umfassend, einerseits, ein Einhakteil (1), das mit einem der zusammenzuhaltenden Gegenstände fest verbunden sein kann, und, andererseits, ein Haltemittel (2 ; 4), das mit dem anderen Gegenstand fest verbunden sein kann und ausgestaltet ist, um das besagte Einhakteil (1) vor der Freigabe zu halten, wobei das besagte Haltemittel (2 ; 4) durch das Zusammenrücken mehrerer trennbarer Teile (20 ; 42) um einen formschlüssig befestigbaren Teil (10) des besagten Einhakteils herum gebildet sei, die mit Hilfe von abnehmbaren Vorspannhilfsmitteln (3) zusammengerückt gehalten werden, wobei die besagten trennbaren Teile aus Teilstücken (20 ; 42) des besagten Haltemittels (2 ; 4) bestehen, die über elastisch verformbare Mittel (21 ; 23 ; 44) miteinander verbunden sind, welche die besagten Teilstücke (20 ; 42) auseinander zurückzustellen pflegen, und welche sich bei der Freigabe alle von dem besagten Einhakteil (1) entfernen, **dadurch gekennzeichnet, dass** die besagten Vorspannhilfsmittel (3) aus einem Bauteil bestehen, das ein Bindeglied bildet, welches um die besagten Teilstücke (20 ; 42) herum gewickelt ist, derart, um diese um den besagten Einhakteil (1) herum geschlossen zu halten, und dessen zumindest ein Ende (31 ; 35) an einem Mechanismus (8) zur Beibehaltung der Spannung, die auf dieses Bindeglied (3) ausgeübt ist, befestigt ist, der Mittel (80 ; 85, 86) umfasst, die es erlauben, diese Spannung auf Wunsch zu befreien.

2. Befestigungsvorrichtung nach Anspruch 1, **dadurch gekennzeichnet, dass** das Haltemittel (2 ; 4) aus einer Greifzange besteht, die als ein im allgemeinen röhrenförmiges Bauteil ausgestaltet ist, und in welcher teilweise Längsspalte (28 ; 41) ausgeführt sind, die Petalen bilden, die die Eigenschaften einer Feder aufweisen, die es erlauben, die Endbereiche der besagten Petalen aufneu von einander zu entfernen, welche Endbereiche die trennbaren Teilstücke (20 ; 42) bilden, wenn sie nicht der Wirkung der Vorspannhilfsmittel (3) ausgesetzt sind.

3. Befestigungsvorrichtung nach Anspruch 1 oder Anspruch 2, **dadurch gekennzeichnet, dass** der Teil (10) des Einhakteils (1), vorgesehen, um zwischen den trennbaren Teilstücken (20 ; 42) eingespannt zu werden, und die Bereiche dieser Letzteren, die vorgesehen sind, um mit dem besagten Einhakteil (1) in Berührung zu kommen, komplementäre Profile aufweisen, die geeignet sind, um einen Rückhalt zu sichern, wenn die besagten trennbaren Teilstücke (20 ; 42) der Vorspannung ausgesetzt sind.

4. Befestigungsvorrichtung nach irgendeinem der Ansprüche 1 bis 3, **dadurch gekennzeichnet, dass** das Haltemittel (2 ; 4) mit einem der einzuhakenden Gegenstände über Mittel (10, 22 ; 48, 6) verbunden werden kann, die imstande sind, um mehrere Freiheitsgrade eines Gegenstands hinsichtlich eines anderen zu sichern, während dabei eine große translatorische Steifigkeit in axialer Richtung beibehalten wird.

5. Befestigungsvorrichtung nach Anspruch 4, **dadurch gekennzeichnet, dass** das Haltemittel (2) ein Plättchen (24) umfasst, das vorgesehen ist, um an dem einen der zusammenzufügenden Gegenstände befestigt zu werden, und mit welchem die elastisch verformbaren Mittel (23) über gelenkartige Bereichen (25, 26) fest verbunden sind.

6. Befestigungsvorrichtung nach Anspruch 4, **dadurch gekennzeichnet, dass** das Haltemittel (4) gegen den Gegenstand, mit welchem er fest verbunden werden kann, über eine Schnittstelle (6) abstützt, das eine Oszillationsbewegung des besagten Gegenstands hinsichtlich des Einhakteils erlaubt.

7. Befestigungsvorrichtung nach Anspruch 4, **dadurch gekennzeichnet, dass** die Gesamtheit der trennbaren Teilstücke (42) des Haltemittels (4), die gegeneinander eingezwängt gehalten werden, endseitig einen Hohlraum (48) in Form von einer Kugelkalotte aufweist, die mittig von dem Hohlraum (43) durchbohrt ist, der vorgesehen ist, um das Einhakteil aufzunehmen, während die Schnittstelle (6) aus einer Unterlegscheibe besteht, die einen Rand (61) aufweist, der so gestaltet ist, um beim Verschwenken mit dem besagten Hohlraum (48) zusammenzuwirken, gegen welchen er abstützt, während der entgegengesetzte Rand (60) unmittelbar oder mittelbar gegen den Gegenstand, mit welchem das besagte Haltemittel (4) fest verbunden ist, in flächiger Abstützung verbleibt.

8. Befestigungsvorrichtung nach Anspruch 6 oder Anspruch 7, **dadurch gekennzeichnet, dass** die Berührung zwischen dem Haltemittel (4) und dem Gegenstand, mit dem er fest verbunden sein kann, über eine sperrklinkenförmige Schnittstelle (45, 48, 480, 481) erfolgt, und das besagte Haltemittel (4) Mittel (460) umfasst, die seinen Antrieb in axialer Drehung erlauben, derart, dass eine Drehung (R) in der entgegengesetzten Richtung zu jener der Wicklung der Bindeglieds (32), während das freie Ende desselben gesperrt ist, das Zusammenrücken der trennbaren Teilstücke (42) des Haltemittels (4) erlaubt.

9. Befestigungsvorrichtung nach irgendeinem der Ansprüche 1 bis 8, **dadurch gekennzeichnet, dass** das Bindeglied (3) als ein Bandstreifen (32) aus Metall oder aus einem Verbundwerkstoff oder Kunststoff ausgestaltet ist, der um sich selbst aufgewickelt ist, um wie eine Spirale geformt zu sein, und der die Eigenschaften einer Feder aufweist, dessen Ende (33) auf der Seite der inneren Windung fest mit einem der trennbaren Teilstücke (42) des Haltemittels (4) verbunden ist, während das andere Ende (35) auf der Seite der Außenwindung nach dem Aufwickeln des besagten Bandstreifens (32) auf dem besagten Haltemittel (4) um die besagten trennbaren Teilstücke (42) herum fest mit dem Haltemechanismus befestigt ist.

10. Befestigungsvorrichtung nach Anspruch 9, **dadurch gekennzeichnet, dass** der Haltemechanismus (8) aus einem Auslöser (86) mit einem Elektromagneten (85) besteht, der imstande ist, um mit dem freien Ende des Bandstreifens (32), das geformt ist, um an dem besagten Auslöser (86) eingehakt werden zu können, zusammenzuwirken.
